# EUROPEAN PATENT SPECIFICATION

(11) **EP 0 333 871 B1**
(45) Date of publication and mention of the grant of the patent: **30.03.1994**
(21) Application number: 88908321.8
(22) Date of filing: 14.09.1988
(51) Int. Cl.: H02K 1/27

(54) **ROTOR STRUCTURE OF SYNCHRONOUS MOTOR**
ROTORAUFBAU EINES SYNCHRONMOTORS
STRUCTURE DE ROTOR POUR MOTEUR SYNCHRONE

(30) Priority: 17.09.1987 JP 230939/87
(43) Date of publication of application: 27.09.1989
(73) Proprietor: FANUC LTD., Minamitsuru-gun, Yamanashi 401-05 (JP)
(72) Inventor: UCHIDA, Hiroyuki Fanuc Dai-3 Vira-karamatsu, Yamanashi 401-05 (JP)
(74) Representative: Mock, Hans
(86) International application number: JP8800927
(87) International publication number: WO8902669

(56) References cited:
- EP-A- 0 104 830
- EP-A- 0 140 981
- EP-A- 0 215 129
- JP-A- 518 509
- JP-A- 6 399 749
- JP-A-61 293 142
- US-A- 2 062 938
- PATENT ABSTRACTS OF JAPAN vol. 12, no. 60 (E-584)(2907) 23 February 1988 ; & JP-A-62 203 537
- PATENT ABSTRACTS OF JAPAN vol. 9, no. 280 (E-356)(2003) 08 November 1985 ; & JP-A-60 121 948

## Description

### TECHNICAL FIELD

The present invention relates to a structure of a rotor of a radial type synchronous motor wherein the rotor core as a magnetic pole is held between permanent magnets, and more particularly, to a rotor structure having a high strength able to withstand a centrifugal force generated by a rotation of the rotor.

### BACKGROUND ART

A rotor of a motor suffers from the action of a centrifugal force generated by a rotation thereof, and generally, in a radial type synchronous motor in which the rotor core is held between permanent magnets, the element members constituting a rotor of the motor tend to move in a radial direction of the rotor, and a clearance between a rotor and a stator is set to be a very small value to reduce a reluctance thereof. Therefore, it is difficult to adapt such a synchronous motor for large synchronous motor having a high revolutionary speed, because damage occurs due to contact of the rotor with the stator when an element consituting the rotor projects even a little in the radial direction.

U.S. Patent No. 2,062,938 describes a rotor for an electric motor in which elements of the rotor core are restrained from radial movement relative to the axis of the rotor by axial end plates which are provided with abutments to engage within specially provided recesses in the core elements.

### DISCLOSURE OF THE INVENTION

An object of the present invention is to provide a rotor structure of a radial type synchronous motor able to withstand a strong centrifugal force.

According to the present invention there is provided a rotor structure of a radial type synchronous motor, comprising a plurality of permanent magnets arranged annularly around an axis thereof, a plurality of rotor cores arranged around said axis such that each rotor core is held between adjacent permanent magnets and acts as a magnetic pole, the radially outermost periphery of each rotor core being arcuate and having a radius of curvature less than the radius of curvature of the outermost periphery of the rotor as a whole, and end plates positioned at axial ends of said rotor cores and said permanent magnets, characterised in that said permanent magnets and rotor cores have flat axial ends corresponding ends of which lie in a common plane, and that each of said end plates is a thin press-formed member provided with a plurality of projections formed at the periphery of the plate and which extend substantially parallel to the axis of the motor, each of said projections engaging an end portion of the radially outermost periphery of at least one of said rotor cores, thereby restraining said at least one rotor core from radially outward movement.

Preferably, each of said projections engages the radially outermost periphery of one of said permanent magnets and an end portion of the radially outermost periphery of each of the rotor cores adjacent said permanent magnet.

Preferably, each of said rotor cores comprises a plurality of rotor elements arranged axially end to end, each of said permanent magnets comprises a plurality of magnet elements arranged axially end to end, corresponding ends of each rotor element and magnet element lying in a common plane, and an intermediate end plate is provided between adjacent ends of each rotor and magnet element, said intermediate end plate being a thin press-formed member provided with a plurality of projections formed at the periphery of the plate and which extend substantially parallel to the axis of the motor, each of said projections engaging an end portion of the radially outermost periphery of at least one of said rotor elements, thereby restraining said at least one rotor element from radially outward movement.

Preferably, the peripheral projections of the intermediate end plate are alternatively directed in opposite directions so as to engage rotor and/or magnet elements positioned on either side thereof.

Preferably, each end plate includes an attachment portion at a central position thereof for fixing the end plate on to an output shaft of the motor without leaving a clearance between the shaft and the end plate.

### BRIEF DESCRIPTION OF THE DRAWINGS

Figure 1 is a side view of a rotor according to the present invention;
Figure 2 is a front view of an end plate taken along the line II-II of Fig. 1;
Figure 3 is a sectional view taken along the line III-III of Fig. 2;
Figure 4 is a side view of a rotor of another embodiment according to the present invention;
Figure 5 is a side view of an end plate of another embodiment used in the present invention; and
Figure 6 is a side view of an end plate of yet another embodiment of the present invention.

### BEST MODE OF CARRYING OUT THE INVENTION

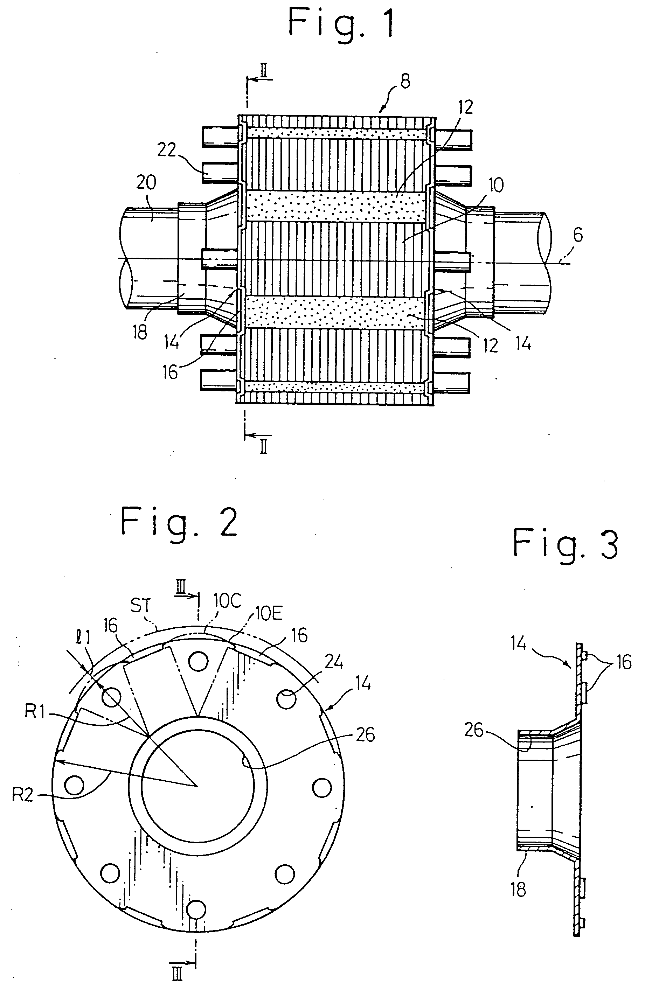

The present invention is described in more detail in the following in accordance with the embodiments shown in the attached drawings. Referring to Fig. 1, a rotor 8 is constructed in such a manner that a laminated rotor core 10 consisting of electromagnetic steel plates is held by permanent magnets 12. The rotor core 10 and permanent magnets 12 are held at both ends thereof in a direction of a central axis 6 of a rotor 8 by end plates 14, and the rotor 8 is fixed to an output shaft 20 by an attachment portion 18 of each end plate 14. The same numbers of holes 24 as that of rotor cores 10 are provided in each end plate 14 as shown in Fig. 2, and the corresponding through-hole is provided to each rotor core 10. A connecting rod 22 is inserted into the through-hole of each rotor core 10 and the hole 24 of each end plate 14, consequently each rotor core 10 is roughly positioned relative to the end plates 14 by the connecting rod 22.

The rotor core 10, however, may be moved in a radial direction when a strong centrifugal force acts thereon because the sizes of the hole 24 and the through-hole are slightly larger than the outer diameter of the connecting rod 22. A clearance between the rotor 8 and a stator ST (schematically shown by a two dotted line in Fig. 2) is set to a very small value to reduce the reluctance. Therefore, contact may occur between the rotor core and an inner face of the stator ST when the rotor core 10 projects even slightly in a radial direction. To solve this problem, projecting portions 16 for regulating the rotor core 10 in the radial direction are provided at an outer periphery of each end plate 14 corresponding to the positions of rotor cores 10.

Generally, an outer dimension R1 of a central portion 10C of the rotor core 10 centrally positioned in a circular direction is larger than an outer dimension of an end portion 10E of the same positioned at ends thereof in a circular direction, and the clearance dimension between the central portion 10C and the stator ST is the minimum ℓ1 of a clearance between the rotor and the stator. Therefore, for example, an inner diameter of the stator ST must be set to be slightly larger to maintain the clearance dimension ℓ1 relative to the stator ST when the central portion 10C is covered with the projecting portion 16 of the end plate 14, and thus the reluctance becomes large. Therefore, the end plates 14 are formed in such a manner that only end portions 10E of the rotor core 10 are covered by each projecting portion 16 according to the present invention, and the outer dimension R2 of the end plate 14 is set to be slightly shorter than the outer dimension R1 of the central portion 10C of the rotor core 10. As shown in Fig. 2, according to the present invention, each projecting portion 16 is formed to extend over two rotor cores 10 adjacent to each other so that the same engages with two end portions 10E opposing each other of the two rotor cores 10. However, two respectively projecting portions may be formed to be engaged with each end portion 10E of each rotor core 10 instead of the above each one-piece type projecting portion 16. Furthermore, when an increase of the reluctance is negligible, a projecting portion may be formed along the entire outer periphery of the end photo 14 (that is, an annular flange) an outer dimension of which R2 is set to be slightly larger than the outer dimension R1 of the central portion 10C and may cover the central portion of each rotor core 10 to be in contact with an outer surface of each central portion.

The inner diameter of a hole 26 of the attachment portion 18 of each end plate 14 shown in Fig. 3 is set in such a manner that the attachment portion is fixed to the output shaft 20 shown in Fig. 1, for example, by shrinkage fit. Two end plates 14 of both ends of the rotor 8 shown in Fig. 1 have the same shape and dimension. A stainless steel or the like is preferable as the material of each end plate 14, and each end plate can be precisely formed from a circular plate by mechanical pressing.

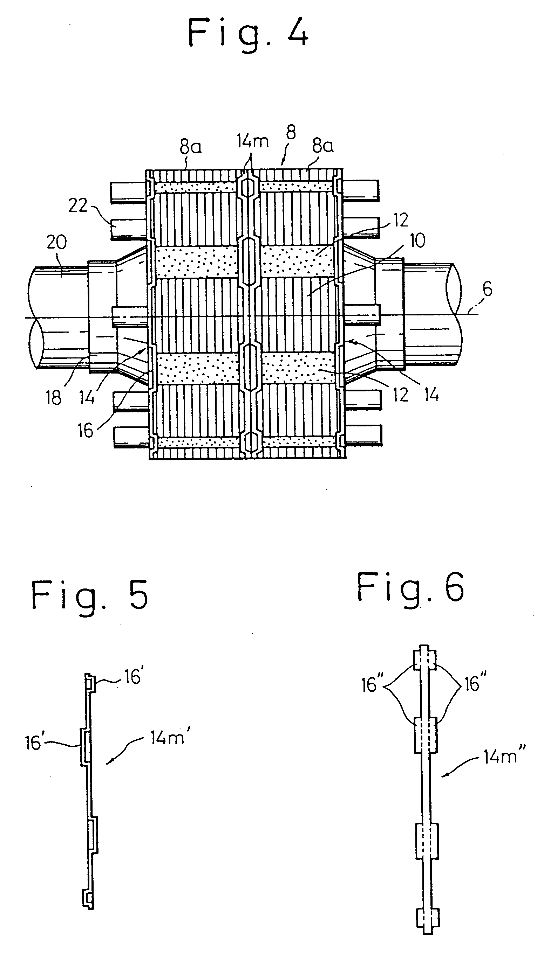

When a rotor 8 has a long central axis, the same is generally constructed by arranging a plurality of rotor elements in the longitudinal direction. Figure 4 shows an example of such a rotor. Two annular end plates 14m provided with the same projecting portions as in the above embodiments are disposed between two rotor elements 8a in such a manner that a back face of each plate is in contacts with the other to hold an end portion of each rotor element 8a. These end plates 14m have an annular shape and are not provided with an attachment portion such as the attachment portion 18 shown in Fig. 3 at a central portion thereof. Namely, where a rotor consists of a plurality of rotor elements 8a, both end portions of the rotor are held by the same end plates 14 as in the first embodiment, and other end portions of the rotor elements 8a are held by annular end plates 14m, two each of which are disposed between each rotor element 8a, back to back. Each annular end plate 14m may have the same shape and dimension.

A side view of an annular end plate 14m′ formed from one plate by mechanical pressing is shown in Fig. 5. This plate 14m′ replaces the pair of two annular end plates 14m shown in Fig. 4. The end plate 14m′ is formed in such a manner that projecting portions 16′ project alternately to one side or to the other side of the end plate, and thus each rotor core of each rotor element 8a is held alternately.

Figure 6 shows a side view of another annular end plate 14m˝ which replaces a pair of two annular end plates 14m shown in Fig. 4. The end plate 14m˝ is formed in such a manner that a plurality of pairs of projecting portions 16˝ project to both sides of the end plate, pair by pair, by which all rotor cores of each rotor element 8a are held.

As apparent from the foregoing description, according to the present invention there can be provided a rotor structure able to withstand a strong centrifugal force, and consequently, a large synchronous motor having a high revolutionary speed can be provided.

### Table of Reference Numbers

- 8: Rotor
- 10: Rotor Core
- 10C: Central Portion of Rotor Core in Circular Direction
- 10E: End Portion of Rotor Core in Circular Direction
- 12: Permanent Magnet
- 14: End Plate
- 16: Projecting Portion of Periphery of End Plate
- ST: Stator

## Claims

1. A rotor structure of a radial type synchronous motor, comprising a plurality of permanent magnets (12) arranged annularly around an axis thereof, a plurality of rotor cores (10) arranged around said axis such that each rotor core (10) is held between adjacent permanent magnets (12) and acts as a magnetic pole, the radially outermost periphery of each rotor core (10) being arcuate and having a radius of curvature less than the radius of curvature of the outermost periphery of the rotor as a whole, and end plates (14) positioned at axial ends of said rotor cores (10) and said permanent magnets (12), characterised in that said permanent magnets (12) and rotor cores (10) have flat axial ends corresponding ends of which lie in a common plane, and that each of said end plates (14) is a thin press-formed member provided with a plurality of projections (16, 16') formed at the periphery of the plate (14) and which extend substantially parallel to the axis of the motor, each of said projections (16, 16') engaging an end portion (10E) of the radially outermost periphery of at least one of said rotor cores (10), thereby restraining said at least one rotor core from radially outward movement.

2. A rotor structure according to claim 1, wherein each of said projections (16, 16') engages the radially outermost periphery of one of said permanent magnets (12) and an end portion (10E) of the radially outermost periphery of each of the rotor cores (10) adjacent said permanent magnet (12).

3. A rotor structure according to claim 1 or claim 2, wherein each of said rotor cores (10) comprises a plurality of rotor elements (8a) arranged axially end to end, each of said permanent magnets (12) comprises a plurality of magnet elements arranged axially end to end, corresponding ends of each rotor element (8a) and magnet element lying in a common plane, and an intermediate end plate (14m) is provided between adjacent ends of each rotor and magnet element, said intermediate end plate (14m) being a thin press-formed member provided with a plurality of projections (16', 16'') formed at the periphery of the plate (14m) and which extend substantially parallel to the axis of the motor, each of said projections (16', 16'') engaging an end portion (10E) of the radially outermost periphery of at least one of said rotor elements (8a), thereby restraining said at least one rotor element (8a) from radially outward movement.

4. A rotor structure according to claim 3, wherein the peripheral projections (16', 16'') of the intermediate end plate (14m) are alternatively directed in opposite directions so as to engage rotor and/or magnet elements positioned on either side thereof.

5. A rotor structure according to any preceding claim, wherein each end plate (14, 14m) includes an attachment portion (18) at a central position thereof for fixing the end plate on to an output shaft (20) of the motor without leaving a clearance between the shaft (20) and the end plate (14, 14m).

## Patentansprüche

1. Rotoraufbau eines Radialtyp-Synchronmotors, umfassend mehrere Permanentmagneten (12), die ringförmig um seine Achse angeordnet sind, mehrere Rotorkerne (10), die um diese Achse herum derart angeordnet sind, daß jeder Rotorkern (10) zwischen benachbarten Permanentmagneten (12) gehalten wird und als ein magnetischer Pol wirkt, wobei der radial äußerste Umfang jedes Rotorkerns (10) bogenförmig ausgebildet ist und einen Krümmungsradius besitzt, der geringer ist als der Krümmungsradius des Außenumfangs des Rotors insgesamt, und sich an axialen Enden der Rotorkerne (10) und der Permanentmagneten (12) Endplatten (14) befinden, **dadurch gekennzeichnet**, daß die Permanentmagneten (12) und Rotorkerne (10) flache axiale Enden besitzen, von denen entsprechende Enden in einer gemeinsamen Ebene liegen, und daß jede der Endplatten (14) ein dünnes Preßteil ist, welches mit einer Mehrzahl von Vorsprüngen (16, 16') versehen ist, die an dem Umfang der Platte (14) ausgebildet sind, und die sich im wesentlichen parallel zu der Motorachse erstrecken, wobei jeder der Vorsprünge (16, 16') mit einem Endabschnitt (10E) des radial am weitesten außen liegenden Umfangs von mindestens einem der Rotorkerne (10) in Eingriff steht, um dadurch den mindestens einen Rotorkern an einer radial nach außen gerichteten Bewegung zu hindern.

2. Rotoraufbau nach Anspruch 1, bei dem jeder der Vorsprünge (16, 16') mit dem radial am weitesten außen befindlichen Umfang eines der Permanentmagneten (12) und einem Endabschnitt (10E) des radial am weitesten außen liegenden Umfangs jedes der Rotorkerne (10) in der Nachbarschalt des Permanentmagneten (12) in Eingriff steht.

3. Rotoraufbau nach Anspruch 1 oder Anspruch 2, bei dem jeder der Rotorkerne (10) mehrere Rotorelemente (8a) aufweist, die eines am anderen in axialer Richtung angeordnet sind, jeder der Permanentmagneten (12) mehrere Magnetelemente aufweist, die eines am anderen in axialer Richtung angeordnet sind, wobei entsprechende Enden jedes Rotorelements (8a) und Magnetelements in einer gemeinsamen Ebene liegen, und eine Zwischen-Endplatte (14m) zwischen benachbarten Enden jedes Rotor- und Magnetelements vorgesehen ist, wobei die Zwischen-Endplatte (14m) ein dünnes Preßteil mit mehreren, am Umfang der Platte (14m) ausgebildeten, Vorsprüngen (16', 16'') ist, die sich im wesentlichen parallel zu der Motorachse erstrecken, wobei jeder der Vorsprünge (16', 16'') mit einem Endabschnitt (10E) des radial am weitesten außen befindlichen Umfangs von mindestens einem der Rotorelemente (8a) in Eingriff steht, um dadurch das mindestens eine Rotorelement (8a) an einer Bewegung radial nach außen zu hindern.

4. Rotoraufbau nach Anspruch 3, bei dem die Umfangsvorsprünge (16', 16'') der Zwischen-Endplatte (14m) abwechselnd in entgegengesetzte Richtungen weisen, um mit an jeder Seite befindlichen Rotor- und/oder Magnetelementen in Eingriff zu treten.

5. Rotoraufbau nach einem der vorhergehenden Ansprüche, bei dem jede Endplatte (14, 14m) einen Befestigungsabschnitt (18) an ihrem Mittelbereich aufweist. um die Endplatte an einer Ausgangswelle (20) des Motors zu fixieren, ohne das ein Spiel zwischen der Welle (20) und der Endplatte (14, 14m) verbleibt.

## Revendications

1. Structure de rotor d'un moteur synchrone de type radial, comprenant une pluralité d'aimants permanents (12) disposés annulairement autour d'un axe de celui-ci, une pluralité de noyaux (10) de rotor disposés autour dudit axe de telle sorte que chaque noyau (10) de rotor est maintenu entre des aimants permanents (12) adjacents et sert de pôle magnétique, la périphérie radialement la plus extérieure de chaque noyau (10) de rotor étant arquée et ayant un rayon d'arrondi inférieur au rayon d'arrondi de la périphérie la plus extérieure du rotor dans son ensemble, et des plaques de bout (14) positionnées au niveau des extrémités axiales desdits noyaux (10) de rotor et desdits aimants permanents (12), caractérisée en ce que lesdits aimants permanents (12) et les noyaux (10) de rotor présentent des extrémités axiales plates dont les extrémités correspondantes se trouvent dans un plan commun, et en ce que chacune desdites plaques de bout (14) est un élément mince moulé à pression pourvu d'une pluralité de saillies (16, 16') formées au niveau de la périphérie de la plaque (14) et qui s'étendent sensiblement parallèles à l'axe du moteur, chacune desdites saillies (16, 16') engageant une portion d'extrémité (10E) de la périphérie radialement la plus extérieure d'au moins un desdits noyaux (10) de rotor, restreignant ainsi ledit au moins un noyau de rotor dans son mouvement radialement vers l'extérieur.

2. Structure de rotor selon la revendication 1, dans laquelle chacune des saillies (16, 16') engage la périphérie radialement la plus extérieure d'un desdits aimants permanents (12) et une portion d'extrémité (10E) de la périphérie radialement la plus extérieure de chacun des noyaux (10) de rotor adjacent audit aimant permanent (12).

3. Structure de rotor selon la revendication 1 ou la revendication 2, dans laquelle chacun des noyaux (10) de rotor comprend une pluralité d'éléments de rotor (8a) disposés axialement bout à bout, chacun desdits aimants permanents (12) comprend une pluralité d'éléments d'aimant disposés axialement bout à bout, des extrémités correspondantes de chaque élément de rotor (8a) et un élément d'aimant se trouvant dans un plan commun, et une plaque de bout intermédiaire (14m) est prévue entre les extrémités adjacentes de chaque rotor et de chaque élément d'aimant, ladite plaque de bout intermédiaire (14m) étant un élément mince moulé à pression pourvu d'une pluralité de saillies (16', 16'') formées au niveau de la périphérie de la plaque (14m) et qui s'étendent sensiblement parallèles à l'axe du moteur, chacune desdites saillies (16', 16'') engageant une portion d'extrémité (10E) de la périphérie radialement la plus extérieure d'au moins un desdits éléments de rotor (8a), restreignant ainsi ledit au moins un élément de rotor (8a) dans son mouvement radialement vers l'extérieur.

4. Structure de rotor selon la revendication 3, dans laquelle les saillies périphériques (16', 16'') de la plaque de bout intermédiaire (14m) sont dirigées alternativement dans des directions opposées de manière à engager le rotor et/ou les éléments d'aimant positionnés de chaque côté de celui-ci.

5. Structure de rotor selon une revendication précédente quelconque, dans laquelle chaque plaque de bout (14, 14m) comporte une portion d'attachement (18) au niveau d'une position centrale de celle-ci destinée à fixer la plaque de bout sur un arbre de sortie (20) du moteur sans laisser un entre-deux entre l'arbre (20) et la plaque de bout (14, 14m).
